**Europäisches Patentamt**

**European Patent Office**

**Office européen des brevets**

(19)

(11) Veröffentlichungsnummer : **0 355 321 B1**

## (12) EUROPÄISCHE PATENTSCHRIFT

(45) Veröffentlichungstag der Patentschrift :
**14.10.92 Patentblatt 92/42**

(51) Int. Cl.$^5$ : **B28D 1/14**

(21) Anmeldenummer : **89111637.8**

(22) Anmeldetag : **27.06.89**

(54) **Bohrvorrichtung zur Herstellung von Bohrlöcher mit Hinterschneidung.**

(30) Priorität : **26.08.88 DE 3828982**

(43) Veröffentlichungstag der Anmeldung :
**28.02.90 Patentblatt 90/09**

(45) Bekanntmachung des Hinweises auf die
Patenterteilung :
**14.10.92 Patentblatt 92/42**

(84) Benannte Vertragsstaaten :
**AT BE CH DE ES FR GB GR IT LI NL SE**

(56) Entgegenhaltungen :
**DE-A- 2 657 000**
**DE-A- 3 014 388**

(56) Entgegenhaltungen :
**DE-A- 3 227 767**
**DE-A- 3 335 074**
**FR-A- 887 811**
**FR-A- 902 101**
**GB-A- 923 806**
**SOVIET INVENTIONS ILLUSTRATED,Sektion**
**P,Q, Woche 8826, 10. August 1988 DERWENT**
**PUBLICATIONS LTD., London, P 54**

(73) Patentinhaber : **fischerwerke Artur Fischer**
**GmbH & Co. KG**
**Weinhalde 14 - 18**
**W-7244 Waldachtal 3/Tumlingen (DE)**

(72) Erfinder : **Fischer, Artur, Prof. Dr. h. c.**
**Weinhalde 34**
**W-7244 Waldachtal 3-Tumlingen (DE)**

EP 0 355 321 B1

**Beschreibung**

Die Erfindung betrifft ein Bohrwerkzeug gemäß der Gattung des Anspruches 1.

Aus der DE-A-32 27 767 ist ein Bohrwerkzeug zur Herstellung eines Bohrloches mit Hinterschneidung bekannt. Das Bohrwerkzeug ist mit einem in eine Bohrmaschine einspannbaren Schaftteil, einem am vorderen Ende angeordneten Bohrkopf und einem am Bohrschaft angebrachten Anschlagsring ausgestattet. Zwischen Anschlagsring und Bohrkopf ist eine Auswölbung ausgebildet, die sich zum Bohrkopf einerseits und zum Anschlagsring andererseits hin verjüngt. Nach Erreichen der durch den Anschlagsring festgelegten Bohrlochtiefe wird die Bohrerachse durch Schrägstellung ausgeschwenkt und gleichzeitig durch eine Taumelbewegung die Hinterschneidung im Bereich der Bohrlochtiefe ausgerieben. Die Auswölbung dient dabei im Zusammenwirken mit der Bohrlochwandung als Schwenklager, wobei die Verjüngung des Bohrschaftes zum einen das Ausschwenken ermöglicht und zum anderen als Anschlag für die Begrenzung des Schwenkwinkels dient.

Nachteilig bei dem bekannten Bohrwerkzeug ist allerdings, daß der Anschlagsring starr mit dem Bohrwerkzeug verbunden ist und unmittelbar auf der Mauerwerksoberfläche zur Anlage kommt. Dadurch werden bei der üblichen Verwendung eines Bohrhammers die vom Bohrhammer ausgehenden Schläge über das Bohrwerkzeug direkt auf das Mauerwerk übertragen. Dies kann zu einem Ausbruch der Bohrlochmündung oder Beschädigung der Mauerwerksoberfläche bzw. des Bohrwerkzeuges führen.

Der Erfindung liegt daher die Aufgabe zugrunde, eine einfache Bohrvorrichtung zur Herstellung von hinterschnittenen Bohrlöchern zu schaffen, bei der Beschädigungen der Wandoberfläche bzw. des Bohrwerkzeuges weitgehendst vermieden sind.

Die Lösung dieser Aufgabe wird bei dem Bohrwerkzeug der eingangs genannten Gattung durch die im kennzeichnenden Teil des Anspruches 1 angegebenen Merkmale erreicht.

Die geschlitzte Hülse bildet in Verbindung mit dem am Bohrschaft ausgebildeten balligen Bund den Anschlag zur Begrenzung der Bohrlochtiefe und zur Ausreibung der Hinterschneidung. Mit dem Anschlagflansch stützt sich die Hülse großflächig an der Mauerwerksoberfläche ab. Durch die gleichzeitige Zentrierung im Bohrloch ergibt sich eine drehsichere Fixierung der Hülse, die eine direkte Übertragung der Schläge vom Bohrwerkzeug auf das Mauerwerk verhindert. Die Abstützung des Bohrwerkzeuges erfolgt über den balligen Bund, der in der leicht konkav ausgeführten Anschlagsfläche der Zentrierhülse aufsitzt. Die Zentrierhülse vermeidet somit, daß die Schläge über den Bund direkt auf das Mauerwerk auftreffen. Da ferner die Auflage des Anschlagflansches auch bei schräg gestelltem Bohrwerkzeug vollflächig erhalten bleibt, sind Beschädigungen des Bohrwerkzeuges durch Verkanten vermieden.

Die axiale Fixierung der Zentrierhülse auf den Bohrschaft wird einerseits durch den Bund und andererseits durch den Schaftvorsprung erreicht. Die Zentrierhülse wird auf die zwischen Bund und Schaftvorsprung ausgebildeten Verjüngung aufgebogen, was durch die Schlitzung der Zentrierhülse ermöglicht wird. Damit ergibt sich auch eine leichte Auswechselbarkeit der Hülse, wenn dies aus Verschleißgründen erforderlich ist.

Bei einer Ausstattung des Bohrschaftes mit Bohrmehlnuten ist es zweckmäßig, daß sich die Bohrmehlnuten über den Bund hinaus erstrecken. Damit wird eine Bohrmehlabfuhr durch die Zentrierhülse und über den Bund hinaus sichergestellt.

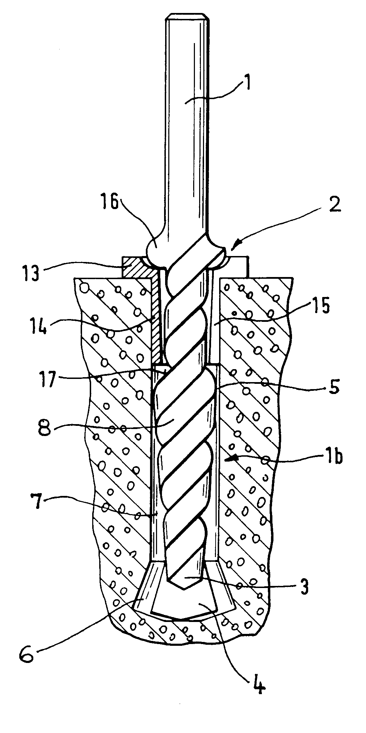

Die Erfindung wird nachfolgend anhand der Zeichnung näher erläutert.

Das Bohrwerkzeug besteht aus einem Bohrschaft 1, der im hinteren Bereich als Schaftteil zum Einspannen in eine Bohrmaschine ausgebildet ist. Am vorderen Ende des Bohrwerkzeuges ist ein Bohrkopf 3 angeordnet, in den ein Bohrplättchen 4 mit am Bohrschaft abstehenden Seitenschneiden eingesetzt ist. Zur Begrenzung der Bohrlochtiefe ist am Bohrschaft 1 ein Anschlagsring 2 angeordnet, der von einem Anschlagsflansch 13 einer Zentrierhülse 14 gebildet wird. Die Zentrierhülse 14 hat einen Längsschlitz 15 und ist zwischen einem balligen Bund 16 und einem Schaftvorsprung 17 gelagert. Der Schaftvorsprung 17 verjüngt sich in Richtung Bohrkopf 3, so daß der Schaftteil 1b zwischen Schaftvorsprung 17 und Bohrkopf 3 die Schwenkbewegung beim Ausreiben der Hinterschneidung 6 definiert begrenzt. Der Schaftvorsprung 17 wird durch die Auswölbung 5 des Bohrschaftes 1 gebildet, die als Schwenklager bei der Herstellung der Hinterschneidung dient. Die Auswölbung 5 liegt an der Wandung des Bohrlochs 7 an und weist in diesem Bereich eine zylindrische Form auf.

Um das während des Bohrvorganges anfallende Bohrmehl aus dem Bohrloch 7 heraustransportieren zu können, besitzt der Bohrschaft 1 Bohrmehlnuten 8, die vom Bohrkopf 3 über die Auswölbung 5 sich über den balligen Bund 16 hinaus erstrecken.

**Patentansprüche**

1. Bohrwerkzeug zur Herstellung von Bohrlöchern mit Hinterschneidung, mit einem in eine Bohrmaschine einspannbaren Schaftteil, einem am vorderen Ende des Bohrwerkzeuges angeordneten Bohrkopf, einem am Bohrschaft angebrachten Anschlagsring und einer zwischen Anschlagsring und Bohrkopf ausgebildeten Auswölbung, die sich zum Bohrkopf einerseits und zum Anschlagsring andererseits hin verjüngt, **dadurch gekennzeichnet,** daß am Bohrschaft (1) zwischen der Auswölbung (5) und dem Schaftteil ein balliger Bund (16) ausgebildet ist, und daß an der in Richtung des Bohrkopfes (3) gelegenen Seite des balligen Bundes (16) am Bohrschaft (1) eine geschlitzte Hülse (14) gelagert ist, die als Zentrierhülse dient und einen als Anschlagsring dienenden Anschlagsflansch (13) mit einer Anschlagsfläche hat, an der sich der Bund (16) abstützt.

2. Bohrwerkzeug nach Anspruch 1, **dadurch gekennzeichnet,** daß die Hülse (14) mittels eines am Bohrschaft (1) angebrachten Schaftvorsprunges (17) zwischen dem balligen Bund (16) und dem Schaftvorsprung (17) gehalten ist.

3. Bohrwerkzeug nach Anspruch 2, **dadurch gekennzeichnet,** daß sich der Bohrschaft (1b) vom Schaftvorsprung (17) ausgehend in Richtung Bohrkopf (3) konisch verjüngt.

4. Bohrwerkzeug nach Anspruch 1, **dadurch gekennzeichnet,** daß die Bohrmehlnuten (8) sich über den Bund (16) hinaus erstrecken.

## Claims

1. Drilling tool for producing drilled holes having an undercut, having a shaft portion that can be inserted into a drilling machine, a drilling head arranged at the front end of the drilling tool, a stop ring attached to the drill shaft, and a protuberant portion, formed between the stop ring and the drilling head, which protuberant portion narrows away towards the drilling head on the one hand and the stop ring on the other, characterised in that there is formed on the drill shaft (1) between the protuberant portion (5) and the shaft portion a bulbous collar (16), and that mounted on that side of the bulbous collar (16) that faces towards the drilling head (3), on the drill shaft (1), is a slotted sleeve (14) which acts as a centering sleeve and has a stop flange (13) acting as a stop ring and having a stop surface against which the collar (16) is supported.

2. Drilling tool according to claim 1, characterised in that the sleeve (14) is held by means of a shaft projecting-part (17) attached to the drill shaft (1) between the bulbous collar (16) and the shaft projecting-part (17).

3. Drilling tool according to claim 2, characterised in that the drill shaft (1b) tapers conically from the shaft projecting-part (17) in the direction towards the drilling head (3).

4. Drilling tool according to claim 1, characterised in that the drilling dust grooves (8) extend beyond the collar (16).

## Revendications

1. Dispositif de perçage destiné à former des trous à contre-dépouille, ce dispositif comportant une queue qui peut être fixée dans une machine à percer, une tête porte-lame(s) à son extrémité antérieure, une bague de butée disposée sur le corps de l'outil et une nervure bombée qui est formée entre cette bague et cette tête et dont le diamètre diminue, d'un côté vers ladite bague et de l'autre vers ladite tête, dispositif caractérisé en ce qu'un collet (16) convexe est formé entre la nervure bombée (5) et la queue, et en ce qu'une douille (14) fendue est montée sur le corps, du côté de ce collet convexe (16) tourné vers la tête (3), cette douille servant d'élément de centrage et comportant une collerette (13) qui forme une surface de butée contre laquelle le collet (16) s'appuie.

2. Dispositif de perçage selon la revendication 1, caractérisé en ce que la douille (14) est retenue entre le collet convexe (16) et un renflement (17) formé sur le corps (1) de l'outil.

3. Dispositif de perçage selon la revendication 2, caractérisé en ce que la partie (1b) du corps s'amincit en cône dans la direction de la tête (3), à partir du renflement (17).

4. Dispositif de perçage selon la revendication 1, caractérisé en ce que les rainures (8) d'évacuation de la poussière de perçage sont prolongées au-delà du collet (16).